# EUROPÄISCHE PATENTSCHRIFT

(11) **EP 2 236 781 B1**
(45) Veröffentlichungstag und Bekanntmachung des Hinweises auf die Patenterteilung: **16.05.2018**
(21) Anmeldenummer: 10155334.5
(22) Anmeldetag: 03.03.2010
(51) Int. Cl.: F01M 13/02, G05D 16/06, F16K 7/17

(54) **Druckregelventil**
Pressure control valve
Soupape de réglage de pression

(30) Priorität: 12.03.2009 DE 102009012872
(43) Veröffentlichungstag der Anmeldung: 06.10.2010
(73) Patentinhaber: POLYTEC PLASTICS Germany GmbH & Co. KG, 49393 Lohne (DE)
(72) Erfinder: Soares, Jorge, 48493 Wettringen (DE)
(74) Vertreter: dompatent von Kreisler Selting Werner - Partnerschaft von Patent- und Rechtsanwälten mbB

(56) Entgegenhaltungen:
- EP-A1- 1 398 468
- DE-A1- 4 445 589
- DE-U1- 20 016 214
- GB-A- 648 302
- US-A- 3 754 570
- US-A- 3 989 060
- US-A1- 2008 257 423

## Beschreibung

Die Erfindung betrifft ein Druckregelventil, insbesondere ein Druckregelventil, das zur Entlüftung von Kurbelwellengehäusen bei Kraftfahrzeugen einsetzbar ist.

Bei Verbrennungsmotoren gelangt ein Teil des Verbrennungsgases über die Kolbenringe in das Kurbelgehäuse. Um einen Überdruck im Kurbelgehäuse zu verhindern ist eine Entlüftung erforderlich. Über ein entsprechendes Druckregelventil, das im Kurbelwellengehäuse angeordnet ist, erfolgt ein Entlüften des Kurbelgehäuses, wobei der Auslass des Ventils üblicherweise mit dem Ansaugtrakt des Motors verbunden ist. Zusätzlich ist dem Druckregelventil eine Abscheideeinheit vorgeschaltet, um das Ansaugen von Feinöltröpfchen aus dem Kurbelwellengehäuse zu verhindern.

Ein geeignetes Druckregelventil ist aus DE 20 2004 003 860 bekannt. Dieses Druckregelventil weist ein Gehäuse mit einem Einlass und einem Auslass auf. Der Einlass ist mit dem Inneren des Kurbelwellengehäuses und der Auslass mit dem Ansaugtrakt des Verbrennungsmotors verbindbar. Innerhalb des Gehäuses ist eine Ventilöffnung vorgesehen, die durch eine Regelmembran verschließbar ist. Die Regelmembran überspannt die Ventilöffnung und ist von einem Gehäusedeckel gehalten. Der Gehäusedeckel weist eine Öffnung auf, so dass auf der von der Ventilöffnung abgewandten Seite der Regelmembran Umgebungsdruck herrscht. Aufgrund der Verbindung des Auslasses des Ventils mit dem Ansaugtrakt des Motors erfolgt ein Absaugen des Gases aus dem Kurbelwellengehäuse. Hierdurch wird ein geringer Unterdruck im Kurbelwellengehäuse erzeugt. Die Regelmembran wird durch eine Spiralfeder von der Ventilöffnung weg gedrückt. Ein Verschließen der Ventilöffnung durch die Regelmembran erfolgt bei einer entsprechenden Druckdifferenz zwischen der Umgebung, d.h. der äußeren Membranseite und dem innerhalb des Gehäuses herrschenden Unterdrucks. Hierbei muss die Druckdifferenz so groß sein, dass die durch die Feder aufgebrachte Kraft überwunden wird.

In Abhängigkeit des Betriebszustandes des Motors schwankt der Unterdruck im Ansaugtrakt. Dies führt dazu, dass die Menge des aus dem Kurbelgehäuse abgesaugten Gases ebenfalls stark schwankt. Im Betrieb wirkt auf die Regelmembran einerseits eine aufgrund des Druckunterschiedes zwischen den beiden Membranseiten erzeugte Kraft in Richtung der Ventilöffnung. Dieser Kraft entgegengerichtet ist die Federkraft der Spiralfeder. Ferner wirkt auf die Membran aufgrund des Unterdrucks in den Ventilauslass bzw. dem mit dem Ventilauslass verbundenen Ansaugtrakt des Motors herrschenden Unterdruck eine weitere Kraft. Die aufgrund des Unterdrucks in dem Ansaugtrakt erzeugte Kraft schwankt in Abhängigkeit des Betriebszustandes des Motors. Dies führt dazu, dass das Ventil in Abhängigkeit des Betriebszustandes des Motors bei unterschiedlichen Drücken im Kurbelwellengehäuse öffnet bzw. schließt. Es ist mit einem derartigen Druckregelventil somit nicht möglich, eine im Wesentlichen konstante Gasmenge aus dem Kurbelgehäuse abzuführen.

Aus DE 200 16 214 ist ein Druckregelventil bekannt. Zur Drosselung des Strömungsquerschnitts ist ein Schieber vorgesehen, der quer zur Verschieberichtung durchströmt wird. Aus GB 648302 ist ein Druckregelventil mit axial durchströmbarem Ventil bekannt. Aufgabe der Erfindung ist es, ein Druckregelventil zu schaffen, bei dem trotz schwankender Druckverhältnisse am Auslass ein möglichst gleichmäßiger Volumenstrom realisierbar ist.

Die Lösung der Aufgabe erfolgt erfindungsgemäß durch die Merkmale des Anspruchs 1.

Das erfindungsgemäße Druckregelventil, das vorzugsweise zum Abführen von Gas aus Kurbelwellengehäusen bei Kraftfahrzeugmotoren verwendet werden kann, weist ein Gehäuse mit einem Einlass und einem Auslass auf. Bei Verwendung in Verbindung mit einem Kurbelwellengehäuse ist der Einlass mit dem inneren des Kurbelwellengehäuses und der Auslass mit dem Ansaugtrakt des Motors verbunden. Innerhalb des Gehäuses ist eine Ventilöffnung vorgesehen. Die Ventilöffnung ist durch ein Regelelement öffenbar und schließbar. In geöffnetem Zustand strömt das beispielsweise aus dem Kurbelwellengehäuse abzuführende Gas somit durch den Einlass in das Gehäuse ein und strömt sodann durch die Ventilöffnung hindurch zum Auslass des Druckregelventils. Erfindungsgemäß ist in der Ventilöffnung ein Hohlzylinder angeordnet. Der vorzugsweise rund ausgebildete Hohlzylinder wird bei geöffnetem Ventil von dem Gas in Richtung des Auslasses des Gehäuses durchströmt. Der Hohlzylinder ist somit rohrförmig ausgebildet und weist eine Einlassöffnung sowie eine Auslassöffnung auf. Vorzugsweise weist das Druckregelventil ein insbesondere starr mit dem Gehäuse verbundenes Schließelement auf, durch das der Hohlzylinder, insbesondere die Auslassöffnung des Hohlzylinders, verschließbar ist. Das Schließelement weist somit in bevorzugter Ausführungsform einen im Wesentlichen dem Querschnitt des Hohlzylinders entsprechenden Querschnitt auf. Bei einem runden Hohlzylinder ist das Schließelement somit im Wesentlichen scheibenförmig ausgebildet.

Der Hohlzylinder ist erfindungsgemäß zum Öffnen und Schließen des Ventils verschiebbar. Vorzugsweise erfolgt ein Verschieben des Hohlzylinders in dessen Längsrichtung. Ein verschiebbar angeordneter Hohlzylinder hat den Vorteil, dass das Schließelement starr mit dem Gehäuse verbunden sein kann. Vorzugsweise ist der Hohlzylinder mit dem Regelelement insbesondere starr bzw. fest verbunden. Besonders bevorzugt ist es hierbei, dass der Hohlzylinder bei geöffnetem Ventil in seiner Längsrichtung durchströmt wird. Erfindungsgemäß ist somit eine Einlassöffnung des Hohlzylinders einer Auslassöffnung des Hohlzylinders gegenüberliegend angeordnet. Hierdurch kann eine weitere Vergleichmäßigung der Strömung
erzielt werden. Erfindungsgemäß sind die Einlassöffnung und die Auslassöffnung des Hohlzylinders nicht nur einander gegenüberliegend angeordnet, sondern zusätzlich koaxial zu der Ventilöffnung angeordnet. Hierdurch ist insbesondere bei schwankenden Strömungen ein Verkanten bzw. Verkippen des Hohlzylinders vermieden.

Aufgrund des erfindungsgemäßen Vorsehens eines insbesondere in Längsrichtung verschiebbaren Hohlzylinders kann auch bei schwankenden Druckverhältnissen am Auslass des Druckregelventils eine Vergleichmäßigung des durch die Ventilöffnung strömenden Gasvolumens erzielt werden. Dies liegt insbesondere darin begründet, dass die Angriffsfläche der durch den im Auslass des Ventils schwankenden Druck erzeugten Kraft aufgrund des Vorsehens eines Hohlzylinders realisiert ist. Hierbei ist zu berücksichtigen, dass, in vereinfachter Betrachtung, im Wesentlichen nur die in Längsrichtung bzw. in axiale Richtung wirkenden Kräfte relevant sind. Da die durch den Druck erzeugte Kraft von der Fläche abhängig ist, auf die dieser wirkt, und die hinsichtlich der in Längsrichtung wirkenden Kraft relevante Fläche aufgrund des Hohlzylinders gegenüber dem Stand der Technik erheblich reduziert wurde, konnte die durch den im Auslass herrschenden Druck hervorgerufene Kraft erheblich reduziert werden. Dies hat zur Folge, dass Druckschwankungen im Auslass einen deutlich geringeren Einfluss auf den durch die Ventilöffnung strömenden Volumenstrom haben.

Das erfindungsgemäße Vorsehen eines Hohlzylinders in der Ventilöffnung hat ferner den Vorteil, dass weiterhin geringe Strömungswiderstände realisiert werden können und auch der Bauraumbedarf des erfindungsgemäßen Druckregelventils gegenüber demjenigen herkömmlicher, aus dem Stand der Technik bekannter Druckregelventile erhöht werden muss.

Der Hohlzylinder, der vorzugsweise starr mit dem Regelelement verbunden ist, weist vorzugsweise ferner ein Dichtelement auf. Das Dichtelement, das insbesondere als Dichtring ausgebildet und einstückig mit dem Hohlzylinder hergestellt ist, ist vorzugsweise im Bereich der Einlassöffnung des Hohlzylinders angeordnet. Bei geschlossenem Ventil liegt der Dichtring an dem Gehäuse des Ventils, insbesondere einem Gehäuseansatz an. Um das Ventil vollständig zu schließen liegt der Hohlzylinder, insbesondere die Auslassöffnung des Hohlzylinders, an dem Schließelement an.

In bevorzugter Ausführungsform weist das Regelelement eine Regelmembran auf. Erfindungsgemäß erfolgt ein Betätigen, d.h. Verschieben des Hohzylinders aufgrund der zwischen den beiden Membranseiten herrschenden Druckdifferenz. Vorzugsweise überspannt die Membran eine mit einem Gehäusedeckel verschlossene Gehäuseöffnung. Auf der dem Gehäusedeckel zugewandten Seite der Membran herrscht vorzugsweise Umgebungsdruck. Hierzu weist der Gehäusedeckel eine mit der Umgebung verbundene Öffnung auf.

Die Elastizität der Membran selbst kann hierbei derart ausgebildet sein, dass sie eine von der Ventilöffnung weg weisende Kraft erzeugt, die zum Schließen des Ventils überwunden werden muss. Vorzugsweise weist hierzu das Regelelement jedoch ein Federelement auf. Bei dem Federelement kann es sich um ein aus einem elastomeren Kunststoff hergestelltes Element oder auch um eine Feder, wie eine Spiralfeder, handeln. Das Federelement kann beispielsweise als Zugfeder ausgebildet und zwischen der Regelmembran und dem Gehäusedeckel angeordnet sein. Bevorzugt ist die Anordnung des Federelements jedoch auf derselben Membranseite wie der Hohlzylinder. Das Federelement, das insbesondere als Spiralfeder ausgebildet ist, ist somit eine Druckfeder, die zum Verschließen der Ventilöffnung, d.h. beim Verschieben des Hohlzylinders zusammengedrückt wird. Insbesondere durch die Wahl der durch das Federelement erzeugten Gegenkraft kann der Schaltpunkt des Druckregelventils, d.h. die erforderliche Druckdifferenz zum Schließen des Ventils, auf einfache Weise definiert werden.

Ferner weist das erfindungsgemäße Druckventil vorzugsweise ein insbesondere starr mit dem Gehäuse verbundenes Schließelement zum Verschließen des Hohlzylinders auf. Durch das Schließelement erfolgt insbesondere ein Verschließen der Auslassöffnung des Hohlzylinders. In besonders bevorzugter Ausführungsform ist das Schließelement scheibenförmig ausgebildet, wobei vorzugsweise eine Oberseite des Schließelements im Wesentlichen senkrecht zur Längsrichtung des Hohlzylinders bzw. zur Strömungsrichtung in dem Hohlzylinder ausgerichtet ist. Hierdurch kann ein gleichmäßiges, zuverlässiges Verschließen des Hohlzylinders mit Hilfe des Schließelements realisiert werden.

Das erfindungsgemäße Druckregelventil ist vorzugsweise für die Entlüftung eines Kurbelwellengehäuses bei Kraftfahrzeugen verwendbar. Das Druckregelventil ist jedoch auch in anderen Gasströmungen einsetzbar. Ein bevorzugter Einsatz erfolgt hierbei, wenn im Auslassbereich des Druckregelventils schwankende Druckverhältnisse herrschen.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht einer bevorzugten Ausführungsform des erfindungsgemäßen Druckregelventils in geöffnetem Zustand, und
- Fig. 2: eine schematische Schnittansicht einer bevorzugten Ausführungsform des erfindungsgemäßen Druckregelventils in geschlossenem Zustand.

Das erfindungsgemäße Druckregelventil weist ein Gehäuse 10 auf. Das Gehäuse 10 weist einen Einlass 12 auf, der beispielsweise mit einem Innenraum eines Kurbelwellengehäuses eines Kraftfahrzeugmotors verbunden ist. Ferner weist das Gehäuse 10 einen Auslass 14 auf, der beispielsweise mit einem Ansaugtrakt eines Kraftfahrzeugmotors verbunden ist. Ferner weist das Gehäuse 10 einen Gehäusedeckel 16 auf, der eine Gehäuseöffnung 18 verschließt. Die Gehäuseöffnung 18 ist durch ein Regelelement 20 verschlossen. Das Regelelement 20 weist im dargestellten Ausführungsbeispiel eine Regelmembran 22 auf, die die gesamte Gehäuseöffnung 18 überspannt. Die Regelmembran 22 weist im Randbereich eine Verdickung 24 auf. Mittels der ringförmig ausgebildeten Verdickung 24 ist die Regelmembran 22 zwischen dem Gehäusedeckel 16 und dem Gehäuse 10 fixiert.

Der Gehäusedeckel 16 weist eine Öffnung 26 auf, die mit der Umgebung verbunden ist. In einem Bereich 28, der durch das Regelelement 20 und den Gehäusedeckel 16 begrenzt ist, herrscht somit Umgebungsdruck.

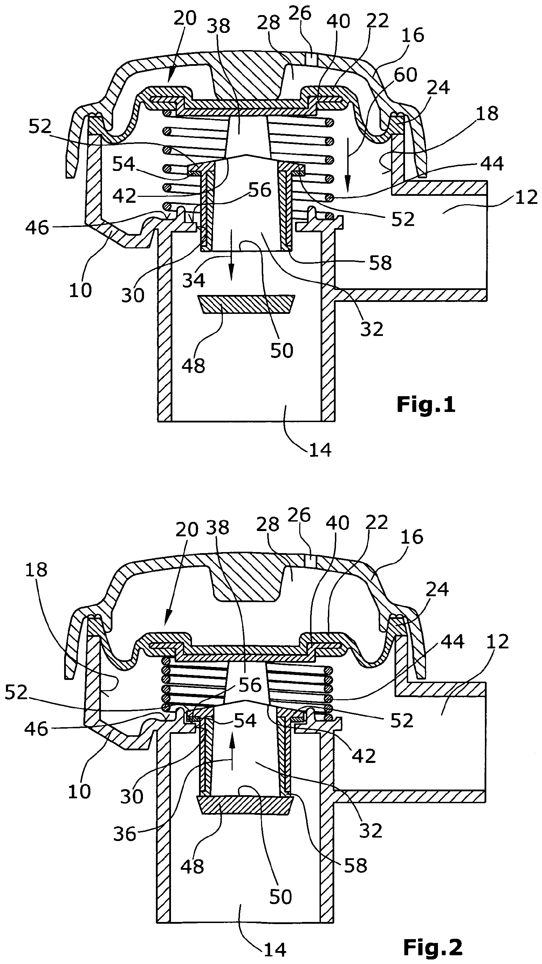

Innerhalb des Ventilgehäuses 10 ist eine Ventilöffnung 30 vorgesehen. In der Ventilöffnung 30 ist ein Hohlzylinder 32 angeordnet. Der Hohlzylinder 32 ist in der Ventilöffnung 30 in Längsrichtung, d.h. zum Verschließen in Richtung eines Pfeils 34 (Fig. 1) und zum Öffnen in Richtung eines Pfeils 36 (Fig. 2) verschiebbar. Der Hohlzylinder 30 ist über ein Zwischenelement 38 mit dem Regelelement 20 verbunden. Im dargestellten Ausführungsbeispiel weist das Regelelement 20 hierzu ein plattenförmig ausgebildetes Halteelement 40 auf. Dieses insbesondere tellerförmig ausgebildete Halteelement 40 ist am Rand teilweise von der Regelmembran 22 zur Verbindung der beiden Teile umgeben. Das Zwischenelement 38 weist vorzugsweise mehrere Stege auf, so dass im Bereich einer Eintrittsöffnung 42 des Hohlzylinders 32 möglichst geringe Strömungswiderstände auftreten.

Ferner ist zwischen der Regelmembran 22 und dem Hohlzylinder 32 ein im dargestellten Ausführungsbeispiel den Hohlzylinder 32 in Längsrichtung teilweise umgebendes Federelement 44 vorgesehen. Im dargestellten Ausführungsbeispiel ist das Federelement 44 als Schraubenfeder ausgebildet.

Das Federelement 44 liegt einerseits an der Innenseite des Halteelements 40 des Regelelements 20 und auf der anderen Seite auf einer Auflagefläche 46 des Gehäuses an.

Ferner ist mit dem Gehäuse 10 starr ein insbesondere tellerförmig ausgebildetes Schließelement 48 verbunden. Das Schließelement 48 verschließt in geschlossenem Zustand des Ventils (Fig. 2) eine Auslassöffnung 50 des Hohlzylinders.

Der Hohlzylinder 32 weist auf der in Richtung der Regelmembran 22 weisenden Seite einen radial nach außen weisenden, ringförmigen Ansatz 52 auf. Der Ansatz 52 trägt ein ebenfalls ringförmig ausgebildetes Dichtelement 54, das in geschlossenem Zustand des Ventils (Fig. 2) an einer Dichtfläche 56 des Gehäuses 10 anliegt.

Mittels eines weiteren, im Bereich der Auslassöffnung 50 des Hohlzylinders angeordneten Dichtelements 58 erfolgt ein dichtes Verschließen der Auslassöffnung 50 durch Anlage an dem Schließelement 48 (Fig. 2).

In dem geöffneten Zustand des Ventils (Fig. 1) strömt das Gas bei Verwendung des Druckregelventils in Verbindung mit einem Kurbelwellengehäuse aus dem Kurbelwellengehäuse durch den Einlass 12 in das Ventilgehäuse 10 ein. In dem Ventilgehäuse 10 strömt das Gas durch die Einlassöffnung 46 des Hohlzylinders 32 in Fig. 1 nach unten und tritt an der Auslassöffnung 50 des Hohlzylinders 32 aus. Das Gas strömt sodann seitlich an dem Schließelement 48 vorbei in Richtung des mit dem Ansaugtrakt des Motors verbundenen Auslasses 14.

Sobald der Druck innerhalb des Gehäuses 10 und in dem Bereich zwischen der Regelmembran 22 und dem Hohlzylinder 32 und somit auch im Kurbelwellengehäuse sinkt, nimmt die Druckdifferenz zwischen den beiden Membranseiten der Regelmembran 22 zu. Aufgrund der Zunahme der Druckdifferenz wirkt auf die Regelmembran eine in Fig. 1 nach unten in Richtung eines Pfeils 60 wirkende Kraft. Der Kraft 60 wirkt die beim Zusammendrücken der Spiralfeder 44 erzeugte Kraft entgegen. Sobald die Kraft 60 bei steigender Druckdifferenz größer ist als die durch die Feder ausgeübte Kraft, bewegt sich die Regelmembran 22 in die Geschlossenstellung (Fig. 2). Da mit der Regelmembran 22 über das Halteelement 40 und das Zwischenelement 38 auch der Hohlzylinder 32 verbunden ist, wird der Hohlzylinder 32 in Fig. 1 nach unten in die in Fig. 2 dargestellte Geschlossenstellung verschoben.

Auf die vorstehend beschriebene, prinzipielle Funktionsweise des Druckregelventils hat der im Ansaugtrakt des Motors und somit auch im Bereich des Auslasses 14 herrschende Druck nur einen sehr geringen Einfluss. Hinsichtlich einer durch diesen Druck erzeugten, in Fig. 1 nach unten, d.h. in Richtung des Pfeils 60 wirkenden Kraft wirkt der im Auslassbereich 14 herrschende Druck im Wesentlichen nur auf die ringförmige Fläche 58. Da die Fläche 58, verglichen mit dem Gesamtquerschnitt des Hohlzylinders 32, sehr gering ist, ist der Einfluss der durch den in dem Auslassbereich 14 herrschenden Druck hervorgerufene Kraft sehr gering. Daher haben auch Druckschwankungen in diesem Bereich nur einen geringen Einfluss.

## Patentansprüche

1. Druckregelventil, insbesondere zur Kurbelwellengehäuse-Entlüftung bei Kraftfahrzeugmotoren, mit
einem einen Einlass (12) und einen Auslass (14) aufweisenden Gehäuse (10),
einer innerhalb des Gehäuses (10) angeordneten Ventilöffnung (30),
einem die Ventilöffnung (30) in Abhängigkeit einer Druckdifferenz öffnenden und schließenden Regelelement (20), und
einem in der Ventilöffnung (30) angeordneten Hohlzylinder (32), der zum Öffnen und/oder Schließen des Ventils in Längsrichtung (34, 36) verschiebbar ist,
**dadurch gekennzeichnet, dass**
eine Einlassöffnung (42) des Hohlzylinders (32) einer Auslassöffnung (50) des Hohlzylinders (32) gegenüberliegt, wobei die Einlassöffnung (42), die Auslassöffnung (50) und die Ventilöffnung (30) zueinander koaxial sind, so dass der Hohlzylinder (32) bei geöffnetem Ventil in seiner Längsrichtung (34) in Richtung des Auslasses (14) durchströmbar ist.,

2. Druckregelventil nach Anspruch 1, **gekennzeichnet durch** ein die Einlassöffnung (42) des Hohlzylinders (32) umgebendes Dichtelement (54), das bei geschlossenem Ventil am Gehäuse (10) anliegt.

3. Druckregelventil nach Anspruch 1 oder 2, **dadurch gekennzeichnet, dass** zum Verschließen der Auslassöffnung (15) des Hohlzylinders (32) ein starr mit dem Gehäuse (10) verbundenes Schließelement (48) vorgesehen ist.

4. Druckregelventil nach einem der Ansprüche 1 bis 3, **dadurch gekennzeichnet, dass** der Hohlzylinder (32) mit dem Regelelement (20) insbesondere starr verbunden ist.

5. Druckregelventil nach einem der Ansprüche 1 bis 4, **dadurch gekennzeichnet, dass** das Schließelement (48) scheibenförmig ausgebildet ist und eine Oberseite des Schließelements (48) vorzugsweise im Wesentlichen senkrecht zur Längsrichtung (34) des Hohlzylinders (32) ausgerichtet ist.

6. Druckregelventil nach einem der Ansprüche 1 bis 5, **dadurch gekennzeichnet, dass** das Dichtelement (54) die Einlassöffnung (42) umgibt.

7. Druckregelventil nach einem der Ansprüche 1 bis 6, **dadurch gekennzeichnet, dass** das Dichtelement (54) als Dichtring ausgebildet ist und bei geschlossenem Ventil an einem Gehäuseansatz des Gehäuses (10) anliegt.

8. Druckregelventil nach einem der Ansprüche 1 bis 7, **dadurch gekennzeichnet, dass** das Regelelement (20) eine Regelmembran (22) aufweist, wobei ein Betätigen, insbesondere Verschieben des Hohlzylinders (32) aufgrund der zwischen den beiden Membranseiten herrschenden Druckdifferenz erfolgt.

9. Druckregelventil nach Anspruch 8, **dadurch gekennzeichnet, dass** auf der vom Hohlzylinder (32) abgewandten Membranseite Umgebungsdruck herrscht.

10. Druckregelventil nach Anspruch 8 oder 9, **dadurch gekennzeichnet, dass** die Regelmembran (22) von einem Gehäusedeckel (16) gehalten ist, der eine mit der Umgebung verbundene Öffnung (26) aufweist.

11. Druckregelventil nach einem der Ansprüche 1 bis 10, **dadurch gekennzeichnet, dass** das Regelelement (20) ein Federelement (44) aufweist, wobei das Verschließen des Ventils gegen die Federkraft erfolgt.

12. Druckregelventil nach Anspruch 11, **dadurch gekennzeichnet, dass** das Federelement (44) auf derselben Membranseite wie der Hohlzylinder (32) angeordnet ist.

## Claims

1. Pressure control valve, in particular for crank case ventilation in motor vehicle engines, comprising
a housing (10) having an inlet (12) and an outlet (14),
a valve opening (30) arranged inside the housing (10),
a control element (20) opening and closing the valve opening (30) depending on a pressure difference, and
a hollow cylinder (32) arranged in the valve opening (30), the cylinder being displaceable in the longitudinal direction (34, 36) to open and/or close the valve,
**characterized in that**
an inlet opening (42) of the hollow cylinder (32) is situated opposite an outlet opening (50) of the hollow cylinder (32), wherein the inlet opening (42), the outlet opening (50) and the valve opening (30) are coaxial with respect to each other, so that in the open state of the valve, the hollow cylinder (32) can be flowed through in its longitudinal direction (34) towards the outlet (14).

2. Pressure control valve of claim 1, **characterized by** a sealing element (54) surrounding the inlet opening (42) of the hollow cylinder (32), the element abutting against the housing (10) when the valve is in the closed state.

3. Pressure control valve of claim 1 or 2, **characterized in that** a closing element (48) rigidly connected to the housing (10) is provided for closing the outlet opening (15) of the hollow cylinder (32).

4. Pressure control valve of one of claims 1 to 3, **characterized in that** the hollow cylinder (32) is connected, in particular rigidly connected to the control element (20).

5. Pressure control valve of one of claims 1 to 4, **characterized in that** the closing element (48) is disc-shaped and a top surface of the closing element (48) is preferably oriented substantially vertically to the longitudinal direction (34) of the hollow cylinder (32).

6. Pressure control valve of one of claims 1 to 5, **characterized in that** the sealing element (54) surrounds the inlet opening (42).

7. Pressure control valve of one of claims 1 to 6, **characterized in that** the sealing element (54) is designed as a sealing ring and, in the closed state of the valve, abuts against a housing protrusion of the housing (10).

8. Pressure control valve of one of claims 1 to 7, **characterized in that** the control element (20) has a control diaphragm (22), wherein an actuation, in particular a displacement of the hollow cylinder (32) occurs as a result of the pressure difference prevailing between the two sides of the diaphragm.

9. Pressure control valve of claim 8, **characterized in that** ambient pressure prevails on the diaphragm side averted from the hollow cylinder (32).

10. Pressure control valve of claim 8 or 9, **characterized in that** the control diaphragm (22) is supported by a housing cover (16) having an opening (26) connected to the environment.

11. Pressure control valve of one of claims 1 to 10, **characterized in that** the control element (20) has a spring element (44), wherein the valve is closed against the spring force.

12. Pressure control valve of claim 11, **characterized in that** the spring element (44) is arranged on the same side of the membrane as the hollow cylinder (32).

## Revendications

1. Soupape de régulation de pression, en particulier pour la ventilation du carter de vilebrequin corps des moteurs automobiles, avec
un corps (10) comportant une admission (12) et un refoulement (14),
une lumière de soupape (30) agencée à l'intérieur du corps (10),
un élément régulateur (20) ouvrant et fermant la lumière de soupape (30) en fonction d'une différence de pression, et
un cylindre creux (32) agencé dans la lumière de soupape (30), pouvant coulisser longitudinalement (34, 36) pour ouvrir et/ou fermer la valve,
**caractérisé en ce que**,
une lumière d'admission (42) du cylindre creux (32) se trouve en regard d'une lumière de refoulement (50) du cylindre creux (32), dans lequel la lumière d'admission (42), la lumière de refoulement (50) et la lumière de soupape (30) sont coaxiales, de sorte que l'écoulement d'un fluide soit possible au travers du cylindre creux (32) dans le sens de la longueur (34) en direction du refoulement (14).

2. Soupape de régulation de pression selon la revendication 1, **caractérisé en ce qu'**un élément d'étanchéité (54) entourant la lumière d'admission (42) du cylindre creux (32) est contigu au corps lorsque la soupape est fermée.

3. Soupape de régulation de pression selon la revendication 1 ou 2, **caractérisé en ce qu'**est prévu un élément de fermeture (48) raccordé rigidement au corps (10) afin d'obturer la lumière de refoulement (15) du cylindre creux.

4. Soupape de régulation de pression selon une des revendications 1 à 3, **caractérisé en ce que** le cylindre creux (32) est raccordé rigidement à l'élément régulateur (20) en particulier.

5. Soupape de régulation de pression selon une des revendications 1 à 4, **caractérisé en ce que** l'élément de fermeture (48) est en forme de disque et une face supérieure de l'élément de fermeture (48) est orientée principalement et essentiellement de façon perpendiculaire à la longueur (34) du cylindre creux (32) .

6. Soupape de régulation de pression selon une des revendications 1 à 5, **caractérisé en ce que** l'élément d'étanchéité entoure la lumière d'admission (42).

7. Soupape de régulation de pression selon une des revendications 1 à 6, **caractérisé en ce que** l'élément d'étanchéité (54) est construit comme une bague d'étanchéité et est contigu à un rebord du corps (10) lorsque la soupape est fermée.

8. Soupape de régulation de pression selon une des revendications 1 à 7, **caractérisé en ce que** l'élément régulateur (20) comporte une membrane régulatrice (22), dans laquelle un actionnement, particulièrement un déplacement du cylindre creux (32) résulte de la différence de pression s'exerçant entre les deux faces de la membrane.

9. Soupape de régulation de pression selon la revendication 8, **caractérisé en ce que** la pression environnante s'exerce sur la face de la membrane du côté du cylindre creux (32).

10. Soupape de régulation de pression selon la revendication 8 ou 9, **caractérisé en ce que** la membrane régulatrice (22) est maintenue par un couvercle de corps (16), lequel comporte une ouverture (26) vers l'extérieur.

11. Soupape de régulation de pression selon une des revendications 1 à 10, **caractérisé en ce que** l'élément régulateur (20) comporte un élément élastique (44), dans lequel la fermeture de la valve s'exerce contre la force de rappel élastique.

12. Soupape de régulation de pression selon la revendication 11, **caractérisé en ce que** l'élément élastique (44) est agencé du même côté de la membrane que le cylindre creux (32).
